Europäisches Patentamt

European Patent Office

Office européen des brevets

(19)

(11) Veröffentlichungsnummer : **0 356 429 B1**

# EUROPÄISCHE PATENTSCHRIFT

(12)

(45) Veröffentlichungstag der Patentschrift :
11.09.91 Patentblatt 91/37

(51) Int. Cl.⁵ : **G01N 3/32**

(21) Anmeldenummer : 88902456.8

(22) Anmeldetag : 11.03.88

(86) Internationale Anmeldenummer :
PCT/EP88/00193

(87) Internationale Veröffentlichungsnummer :
WO 88/07669 06.10.88 Gazette 88/22

(54) **VERFAHREN UND VORRICHTUNG ZUM PRÜFEN VON FEDERNDEN ELEMENTEN MIT IM WESENTLICHEN LINEAREM FEDERWEG.**

(30) Priorität : 30.03.87 DE 3710552
10.04.87 DE 3712180

(43) Veröffentlichungstag der Anmeldung :
07.03.90 Patentblatt 90/10

(45) Bekanntmachung des Hinweises auf die
Patenterteilung :
11.09.91 Patentblatt 91/37

(84) Benannte Vertragsstaaten :
DE FR GB IT SE

(56) Entgegenhaltungen :
FR-A- 2 292 966
GB-A- 2 167 523
US-A- 2 222 892
Soviet Inventions Illustrated, Woche B40, 14
November 1979, nr. J5481B/40, Derwent (Lon-
don/GB) & SU-A-641299 (TRACTOR RES INST)
10. Januar 1979

(56) Entgegenhaltungen :
Soviet Inventions Illustrated, Woche K26, 10
August 1983, nr. J7533 K/26, Derwent (Lon-
don/GB) & SU-A-953518 (CHELY TRACTOR
RES) 25. August 1982
Russian Engeneering Journal, Band 51, nr. 10,
1971 (Melton Mowbray GB), AD Levitanus et
al. "Accelerated corrosion-fatigue tests of coiled springs", Seiten 24-26

(73) Patentinhaber :
INDUSTRIEANLAGEN-BETRIEBSGESELLSCHAI
M.B.H.
Einsteinstrasse 20
W-8012 Ottobrunn (DE)

(72) Erfinder : HÜCK, Manfred
Asternweg 25
W-8011 Vaterstetten (DE)

(74) Vertreter : Bohnenberger, Johannes, Dr.
Meissner, Bolte & Partner Widenmayerstrasse
48
W-8000 München 22 (DE)

## Beschreibung

Die Erfindung betrifft ein Verfahren und eine Vorrichtung zum Prüfen von federnden Elementen nach dem Oberbegriff des Patentanspruches 1 bzw. des Patentanspruches 2.

Mit dem Ausdruck "federnde Elemente mit linearem Federweg" sind zum einen nur dem Zweck des Federns dienende Elemente wie Schraubenfedern, Gummifedern, Blattfedern oder dergleichen zu verstehen, zum anderen aber auch mindestens teilweise einem weiteren bzw. anderen Zweck dienende federnde Elemente, wie KfzFederbeine oder auch Alpin-, Sprung- oder Langlaufski.

Für die Entwicklung derartiger Elemente, ebenso wie für die Endkontrolle bei der Fertigung oder für die Eingangskontrolle zugekaufter Teile muß man diese Elemente unter wirklichkeitsnahen Belastungsbedingungen dynamisch prüfen. Dies bedeutet insbesondere, daß man die Elemente z.B. einem Dauertest aussetzt, in welchem üblicherweise bis zu $10^6$ Lastspiele gefahren werden.

Bei einer Art von bisher verwendeten Prüfständen (DD-PS 99656) sind Exzenterantriebe vorgesehen, um die Prüfverformungen in die eingespannten Elemente einzuleiten. Diese Art von Antrieb hat zum einen den Nachteil, daß die Versuchsfrequenz relativ niedrig sein muß, da sonst die nicht ausgleichbaren Massenkräfte zu nicht mehr auffangbaren Lagerbelastungen usw. führen. Die niedrige Frequenz des Lastwechsels wiederum führt zu einer äußerst langen Testdauer am Einzelstück, was für die Entwicklung von derartigen Elementen bereits störend ist, eine stichprobenmäßige Überprüfung einer Fertigung jedoch sehr stark verzögert. Ein weiteres Problem bei Prüfständen mit Exzenterantrieben liegt darin, daß nur Schwingversuche mit konstanten Amplituden durchgeführt werden können, da die Verstellung der Exzenter-Hubhöhe äußerst umständlich ist und nur im Stillstand der Vorrichtung durchgeführt werden kann.

Um wirklichkeitsnähere Beanspruchungsprofile zu erzielen, bei denen eine Vielzahl verschiedener Amplituden durchlaufen werden, sind servohydraulische Prüfanlagen bekannt. Derartige Prüfanlagen sind aber nicht nur in der Herstellung äußerst teuer, sie weisen vielmehr auch einen hohen Verschleiß und Energiebedarf auf, so daß der Betrieb sehr kostspielig ist. Insbesondere bei der Prüfung von schweren Blattfedern (z.B. für Lkw's) werden bei einer servohydraulischen Anlage die reinen Betriebskosten der Anlage extrem hoch, wie dies ein Beispiel verdeutlichen mag : Zur Prüfung einer 10 to Blattfeder mit 300 mm Hub und $10^6$ Lastspielen, die mit einer Frequenz von 2 Hz durchfahren werden, fallen Betriebskosten in der Höhe von ca. DM 20.000, - - an, da die gesamte, beim Einfedern aufgebrachte hydraulische Energie während des Ausfederns in Wärme umgesetzt wird.

Weiterhin ist aus der DE-OS 2522890 eine servohydraulische Prüfanlage bekannt, bei der eine Hilfsmasse an eine zu prüfende Schraubenfeder angekoppelt ist, so daß ein servohydraulisch erregbares Schwingungssystem entsteht. Diese Anordnung weist zwar einen deutlich geringeren Energieverbrauch auf, jedoch werden am Aufstellort Schwingungen erregt, was nicht nur störend ist und ein aufwendiges Maschinenbett erfordert, sondern auch einen Energieverlust bedeutet.

Das Prinzip der Materialprüfung unter Einbeziehung des Prüflings in ein Schwingungssystem ist auch aus der DE-AS 2533373 oder der US-PS 4539845 bekannt. Mit beiden bekannten Systemen können jedoch nur Schwingungen mit sehr geringen Amplituden erregt werden, so daß sich die Anwendung auf die Prüfung von Federn mit linearem (größerem) Federweg verbietet.

Aus der DD-PS 216317 sind ein Verfahren nach dem Oberbegriff des Anspruches 1 bzw. eine Vorrichtung nach dem Oberbegriff des Anspruches 2 bekannt. Hierbei wird ein Massenelement zwischen zwei in Reihe geschaltete und endseitig befestigte Federn (Schraubenfedern) eingebracht, so daß ein Serien-Schwingkreis entsteht. Das Massenelement wird direkt über einen Linearantrieb bei der Resonanzfrequenz des Systems hin- und herbewegt. Auch bei dieser Anordnung wird das ganze System in Schwingungen versetzt, so daß sich die oben beschriebenen Nachteile ergeben.

Insgesamt besteht somit das Problem, daß diese bekannten Verfahren bzw. Anordnungen hohe Betriebskosten mit sich bringen und aufgrund der systembedingten Verluste in ihrer Arbeitsgeschwindigkeit (Resonanzfrequenz) beschränkt sind.

Aus der Zeitschrift Soviet Inventions Illustrated, Woche B40, 14. November 1979, Nr. J5481 B/40, London, GB sind ein Verfahren und eine Vorrichtung zum Prüfen von federnden Elementen bekannt, die zwischen zwei Hebelbalken gelagert und gegenphasig in Schwingung versetzt werden. Diese Gegenphasigkeit der Hebel wird durch einige Zahnrad-Verbindungen zwischen den Hebeln erzielt. Durch diese Verbindung zwischen den Hebeln ist die Anordnung zum einen unflexibel hinsichtlich der Verstellung zur Aufnahme verschiedener Prüflinge, zum anderen werden in der Getriebeverbindung Schwingungen im Prüfling erregt, die das Prüfergebnis verfälschen. Schließlich muß beim Anfahren der Anordnung ein sehr hohes Drehmoment aufgebracht werden.

Aus der FR-A-2292966 ist ein System bekannt, bei dem zwei Federn zwischen den beiden Enden eines Hebels und einem Maschinenbett eingespannt sind. Die Anordnung soll bei Resonanzfrequenz betrieben werden. Wie eingangs beschrieben ist eine solche Anordnung insofern nachteilig, als nach außen Massenkräfte frei werden, welche die Prüffrequenz und auch die Prüfamplitude erheblich beschränken.

Ausgehend vom oben genannten Stand der Technik, ist es Aufgabe der vorliegenden Erfindung, Verfahren und Vorrichtung der eingangs genannten Art dahingehend weiterzubilden, daß federnde Elemente auf einfache, kostengünstige Art schneller als bisher geprüft werden können.

Diese Aufgabe wird mit dem Verfahren nach Anspruch 1 und der Vorrichtung nach Anspruch 2 gelöst.

Der wesentliche Punkt der Erfindung besteht also darin, daß man ein resonanzfähiges System aufbaut, bei dem mindestens zwei federnde Elemente miteinander derartig in Wirkverbindung stehen, daß beim Entlasten des einen federnden Elementes das andere belastet wird und umgekehrt, wobei die Prüf- bzw. Belastungsfrequenz der Resonanzfrequenz des Systems entspricht, die durch die Federkräfte und die dem System immanenten Massenträgheitsmomente bestimmt ist.

Wenn man Blattfedern prüfen will, so ist es von Vorteil, wenn man anstelle je einer Blattfeder auf jeder Seite der Hebelbalken zwei mit ihren Außenenden über Zwischenstücke verbundene Blattfedern in Serienschaltung prüft. Auf diese Weise werden zum einen gleichzeitig vier Blattfedern geprüft, zum anderen bleiben die Endpunkte der Blattfedern während des Prüfens in Ruhe. Selbstverständlich ist es immer möglich, als "federndes Element" jeweils eine Vielzahl von Prüflingen parallelgeschaltet einzuspannen. Durch eine höhere Federsteifigkeit wird dann die Resonanzfrequenz des Systems erhöht, so daß die Prüffrequenz steigt und damit die Prüfdauer sinkt. Eine Begrenzung der Prüffrequenz nach oben ergibt sich zum einen durch die aufgrund der Dämpfung im System notwendige Leistung des Schwingerregers, zum anderen durch die Erwärmung der Prüflinge. So z.B. muß bei geschichteten Blattfedern mit der ihnen eigenen hohen Dämpfung (insbesondere nach vielen Lastspielen) eine relativ niedrige Prüffrequenz gewählt werden, da die Federn sonst zu heiß werden und die Prüfergebnisse damit den tatsächlichen Verhältnissen nicht mehr entsprechen.

Durch das erfindungsgemäße Verfahren bzw. die erfindungsgemäße Vorrichtung ist es ohne weiteres möglich, während des Prüfens mit variierenden Amplituden zu fahren, ohne daß dabei die bei Servosystemen auftretenden hohen Energiekosten anfallen.

Wenn man Ski prüft, so kann man durch eine entsprechende, zur Ski-Längsachse unsymmetrische Lagerung der Ski gleichzeitig zur Durchbiegung auch eine Torsion erzeugen.

Zur Prüfung von Schraubenfedern ist es bei bestimmten Fragestellungen günstiger, einzelne Schraubenfederwindungen zu untersuchen, da sich die einzelnen Einflußgrößen dann getrennt untersuchen und bewerten lassen. Beispiele solcher Einflußgrößen sind z.B. Werkstoffeinflüsse, Art des Kugelstrahlens, Oberflächenschutz, Korrosionsverhalten im dynamischen Einsatz, Mittelspannungseinflüsse, statistische Parameter der Dauer-, Zeit- und Betriebsfestigkeit usw.. Durch das erfindungsgemäße Verfahren bzw. die erfindungsgemäße Anordnung wird nun erreicht, daß der Mittelabschnitt der einzelnen Schraubenfederwindung während des gesamten Lastspiels ortsfest bleibt. Dadurch kann man im Mittelabschnitt Meßaufnehmer (z.B. Dehnmeßstreifen) aufbringen, deren Zuleitungen keinerlei Belastungen ausgesetzt sind. Weiterhin ist es möglich, den Mittelabschnitt mit korrodierenden Substanzen (Salzwasser) während des Versuches zu behandeln, was zumindest bei höheren Belastungsfrequenzen bei schwingenden Federn nicht möglich ist. Darüber hinaus kann der Schädigungsvorgang gut beobachtet werden.

Als Schwingerreger eignen sich je nach notwendiger Leistung elektrische oder hydraulische Antriebe. Diese sind vorzugsweise ebenso abnehm- bzw. auswechselbar angeordnet wie die Hebelbalken, so daß die Gesamtvorrichtung auf den Prüfling anpaßbar ist.

Weitere Merkmale der Erfindung ergeben sich aus den abhängigen Ansprüchen und der nachfolgenden Beschreibung bevorzugter Ausführungsformen der Erfindung, die anhand von Abbildungen näher beschrieben werden. Hierbei zeigen :

| Fig. 1 | einen schematisierten Blattfeder-Prüfstand in teilgeschnittener Vorderansicht ; |
|---|---|
| Fig. 2 | einen Schnitt entlang der Linie II-II aus Fig. 1 ; |
| Fig. 3 | einen schematisiert dargestellten Prüfstand für einzelne Schraubenfederwindungen in perspektivischer Ansicht ; |
| Fig. 4 | eine schematisierte Vorderansicht einer zweiten bevorzugten Ausführungsform des Prüfstandes nach Fig. 3 ; |
| Fig. 5 | eine Ausschnittsdarstellung der Federlagerung einer Vorrichtung nach Fig. 4 ; |
| Fig. 6 | eine dritte bevorzugte Ausführungsform eines Prüfstandes ähnlich dem nach Fig. 3 ; |
| Fig. 7 | eine vergrößerte Teil-Schnittdarstellung des Bereiches VII aus Fig. 6 ; |
| Fig. 8 | eine Anordnung von Einspannvorrichtungen zum Prüfen von Ski ; |
| Fig. 9 | eine Teil-Vorderansicht einer bevorzugten Ausführungsform von Einspannvorrichtungen mit Parallelführung ; und |
| Fig. 10 bis 12 | schematisierte Block-Darstellungen von Regelkreisen für Schwingerreger. |

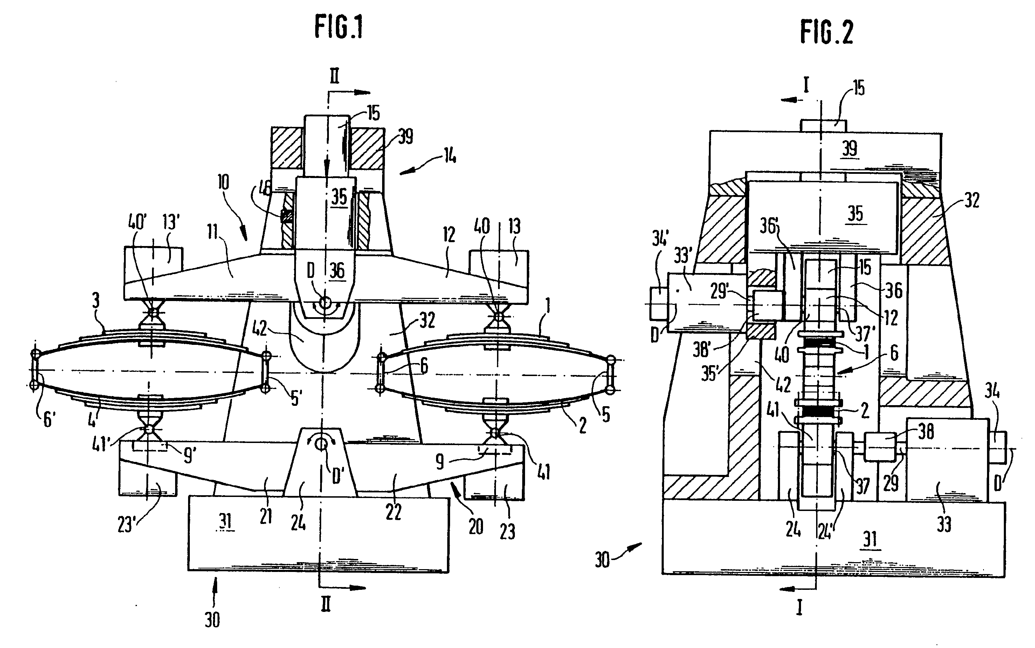

Im folgenden wird eine erste bevorzugte Ausführungsform der Erfindung anhand der Fig. 1 und 2 näher beschrieben, wobei in dieser Anordnung Blattfedern als Prüflinge dargestellt sind.

Wie aus den Abbildungen hervorgeht, sind an einem Maschinengestell 30, das einen Sockel 31 und einen Ständer 32 umfaßt, zwei Hebelbalken 10, 20 übereinander an Lagern 24, 36 so gelagert, daß sie um Drehachsen D und D' hin- und herkippen können. Wie aus Fig. 2 hervorgeht, umfassen die Lager jeweils Lagerbacken 24, 24', von denen die unteren am Maschinengestell 31 befestigt sind, während die oberen Lagerbacken 36, 36' an einer Führung 35 befestigt sind, die über Vorspannmittel 15, z.B. Hydraulikeinrichtungen, die in einem Querhaupt 39 auf dem Ständer 32 befestigt sind, nach unten, in Richtung auf die unteren Lagerbacken 24, 24' verschiebbar sind. Diese Führung 35 zusammen mit dem Vorspannelement 15 stellt somit eine Vorspanneinrichtung 14 dar, über welche die Prüflinge so vorgespannt werden können, daß der Lastzyklus ausschließlich im interessierenden Bereich liegt, wobei dies sowohl eine Zugbelastung als auch (wie in den Fig. 1 und 2 gezeigt) eine Druckbelastung sein kann.

Die Drehachsen D und D' teilen die beiden Hebelbalken 10, 20 jeweils in einen linken Arm 11 bzw. 21 und einen rechten Arm 12 bzw. 22. An den Enden der Arme 11, 12, 21, 22 sind Einspannvorrichtungen 40, 40' bzw. 41, 41' vorgesehen, zwischen denen die Prüflinge eingespannt werden können. Weiterhin sind an den Enden der Arme Zusatzmassen 13, 13' bzw. 23, 23' anbringbar, wobei die Anbringung vorzugsweise dergestalt ist, daß die Zusatzmassen in Richtung auf die Drehachsen D, D' der jeweiligen Hebelbalken 10, 20 verschiebbar sind, so daß man die Massenträgheitsmomente der Hebelbalken 10, 20 über die Zusatzmassen bzw. deren Position zu Drehachse D bzw. D' einstellen kann, wodurch man wiederum eine Einstellung der Prüffrequenz vornehmen kann.

Zur Messung der in die Prüflinge 1 bis 4 eingeleiteten Kräfte ist jeweils eine Einspannvorrichtung 41, 41' mit einem Kraftmeßgeber 9, 9' versehen.

Bei der in den Fig. 1 und 2 gezeigten Ausführungsform der Erfindung werden zur Prüfung von Blattfedern jeweils zwei Blattfedern 1 und 2 bzw. 3 und 4 an ihren Enden über Zwischenstücke 5 und 6 bzw. 5' und 6' zur Bildung von Reihenschaltungen miteinander verbunden, während die jeweils mittleren Aufhängepunkte der Blattfedern 1 bis 4 an den Einspannvorrichtungen 40, 40' bzw. 41, 41' festgesetzt sind. Auf diese Weise sind zum einen die Enden der Blattfedern entsprechend den tatsächlichen Betriebsbedingungen während der Schwingung in Ruhe, andererseits können gleichzeitig insgesamt vier Blattfedern geprüft werden.

Als Schwingerreger dienen Antriebsmotoren 33, 33', deren Ausgangswellen 29, 29' über Wellenkupplungen 38, 38' mit Lagerachsen 37, 37' der Hebelbalken 10, 20 drehfest verbunden sind, so daß die Drehung der Motorwellen 29, 29' zu Kippbewegungen der Hebelbalken 10, 20 führen. Bei der in den Fig. 1 und 2 gezeigten Ausführungsform der Erfindung ist der untere Motor 33 am Maschinengestell befestigt, während der obere Motor 33' an einem Abschnitt 35' der Führung 35 angeflanscht ist und durch einen Ausschnitt 42 im Ständer 32 des Maschinengestells 30 ragt. Jeder der beiden Motoren 33, 33' ist mit einem Winkelgeber 34, 34' versehen, dessen Ausgangssignale zur Regelung von Frequenz, Amplitude und Nullage der Kippbewegungen verwendet werden, wie dies weiter unten näher beschrieben wird.

Je nach dem notwendigen Leistungsbedarf bzw. der einzustellenden Bewegungsfrequenz können die Motoren 33, 33' Hydraulikmotoren bzw. Hydraulik-Schwenkmotoren sein, oder aber entsprechend ausgebildete Elektromotoren. Vorzugsweise sind die Hebelbalken 10, 20 und die Motoren 33, 33' derart auswechselbar, daß sie im Hinblick auf die zu prüfenden federnden Elemente angepaßt werden können. Wenn man z.B. keine geschichteten Blattfedern (wie in den Fig. 1 und 2 gezeigt), sondern Einzelblattfedern prüft, deren Dämpfung äußerst niedrig ist, so kommt man mit schwächeren Motoren aus. Darüber hinaus kann bei solchen Federn mit geringer Dämpfung bei höheren Frequenzen gearbeitet werden, da sich die Federn weniger erwärmen, so daß leichtere Hebelbalken bzw. solche mit geringerem Trägheitsmoment verwendbar sind. Dadurch, daß die Hebelbalken 10, 20 in ihrer Entfernung zueinander einstellbar sind, kann man die zu prüfenden federnden elemente bei Beginn des Versuches zunächst bei hochgefahrener Führung 35 montieren und dann bei heruntergefahrener Führung 35 und nach Fixieren der Führung über ein Klemmelement 46 den Prüfvorgang unter wirklichkeitsnahen Bedingungen durchführen.

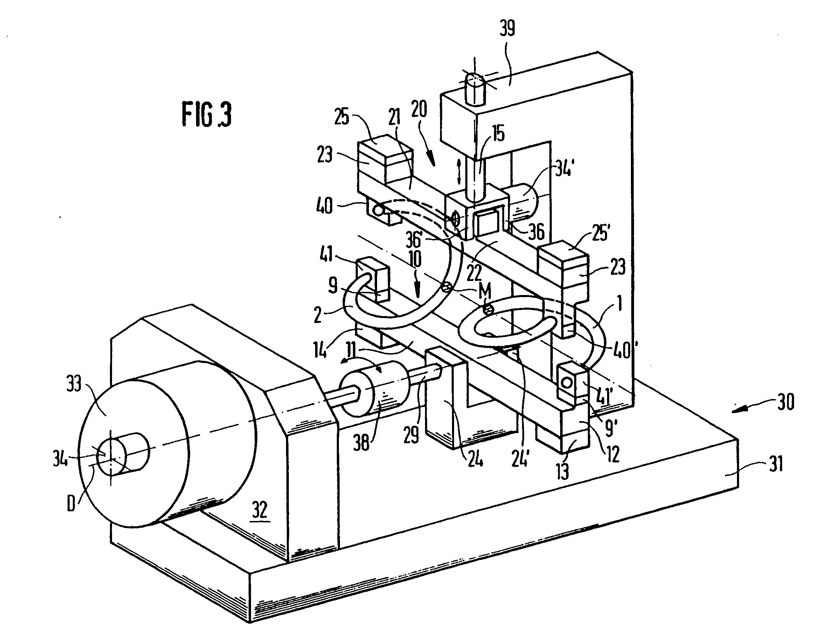

Zum Prüfen von federnden Elementen geringerer Ausmaße eignet sich die in Fig. 3 gezeigte Ausführungsform der Erfindung, wobei in allen folgenden Darstellungen gleiche oder gleich wirkende Teile mit denselben Bezugsziffern bezeichnet sind.

Bei dieser bevorzugten Ausführungsform der Erfindung ist lediglich ein einziger Antriebsmotor 33 an einem Ständer 32 des Maschinengestells 30 befestigt, der den unteren Hebelbalken 10 antreibt. Der obere Hebelbalken 20 weist keinen Antriebsmotor, sondern lediglich einen Drehwinkelgeber 34' auf.

Während bei der zuvor gezeigten, schweren Ausführungsform der Erfindung die Trägheitsmomente der Motoren bzw. deren Antriebswellen usw. gegenüber den Trägheitsmomenten der Hebelbalken nicht ins Gewicht fallen, ist bei der in Fig. 3 gezeigten Ausführungsform der Erfindung das Massenträgheitsmoment das Antriebs (Motor, Kupplung, Wellen) nicht zu vernachlässigen. Aus diesem Grund sind zusätzlich zu den an beiden Hebelbalken 10, 20 vorgesehenen Zusatzmassen 23, 23' bzw. 41, 41' Ausgleichsmassen 25, 25' vorgesehen, so daß die Trägheitsmomente der beiden Hebelbalken 10 und 20 zusammen mit allen mitbewegten Massen identisch sind.

Wenn man, wie in Fig. 3 gezeigt, einzelne Federwindungen prüft, so steht diese auf der Mittellinie zwischen den zwei Hebelbalken 10 und 20 (in Fig. 3 strichpunktiert gezeichnet) still. Dadurch stehen Meßorte M zur Verfügung, um Dehnmeßstreifen oder dergleichen aufzukleben, wobei auch mechanisch sehr empfindliche Meßanordnungen bzw. Meßanordnungen mit empfindlichen Zuleitungen Verwendung finden können, da diese Stellen während des Versuches nicht mitschwingen.

Von besonderem Vorteil ist es hierbei, wenn man beim Anfahren eines Versuches zum "Suchen" der Resonanzfrequenz des Systems nicht mit ganz tiefen, sondern mit sehr hohen Frequenzen bei niedrigen Amplituden beginnt, so daß ein gleichphasiges Schwingen der beiden Hebelbalken 10 und 20, das ein Wandern der Meßpunkte M mit sich bringt, vermieden wird.

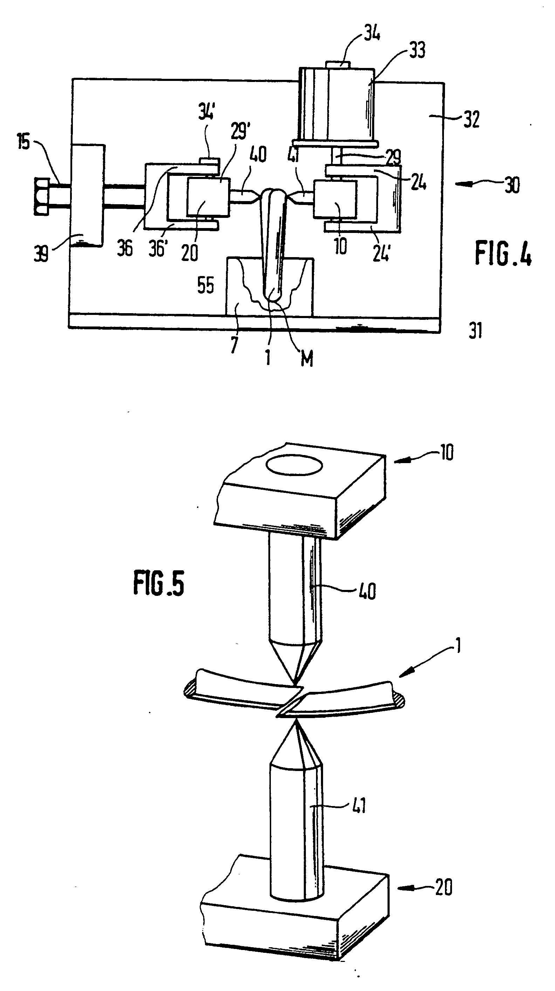

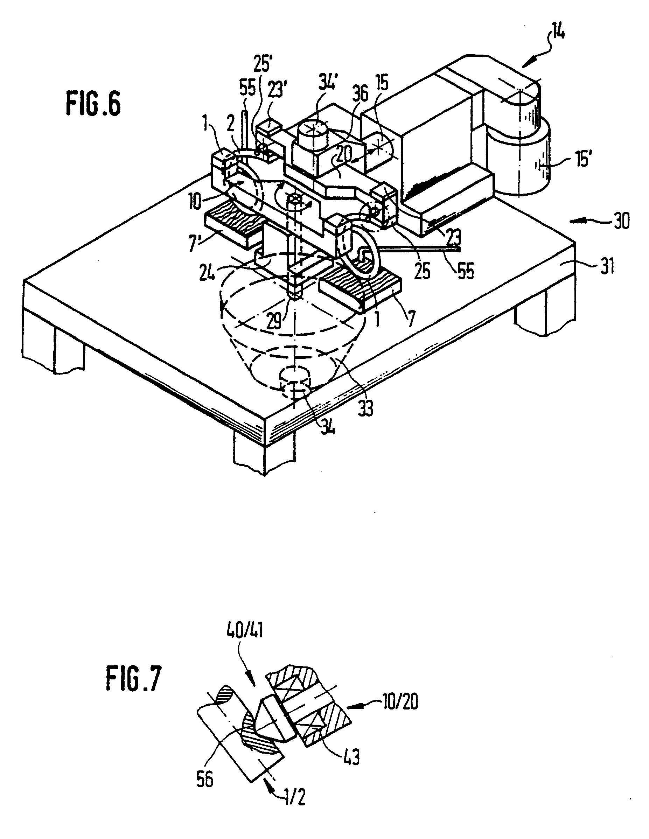

Besonders vorteilhaft zur Prüfung einzelner Federwindungen sind die in den Fig. 4 bis 6 gezeigten Ausführungsformen der Erfindung, wobei die in den Fig. 4 und 6 gezeigten Varianten sich in erster Linie dadurch von der in Fig. 3 gezeigten Ausführungsform der Erfindung unterscheiden, daß die Hebelbalken 10, 20 in einer horizontalen Ebene schwingen. Durch diese Anordnung wird es möglich, einzelne Federwindungen so nach unten hängen zu lassen, daß man über ihnen Sprührohre 55 mit ihren Ausströmöffnungen anordnen und unter ihnen Behälter 7 aufstellen kann. Dadurch kann man Korrosionsversuche durchführen, wobei die korrodierende Flüssigkeit die ruhende Stelle jeder Federwindung korrekt benetzen kann und gegebenenfalls gleichzeitig ein Meßaufnehmer dort befestigbar ist.

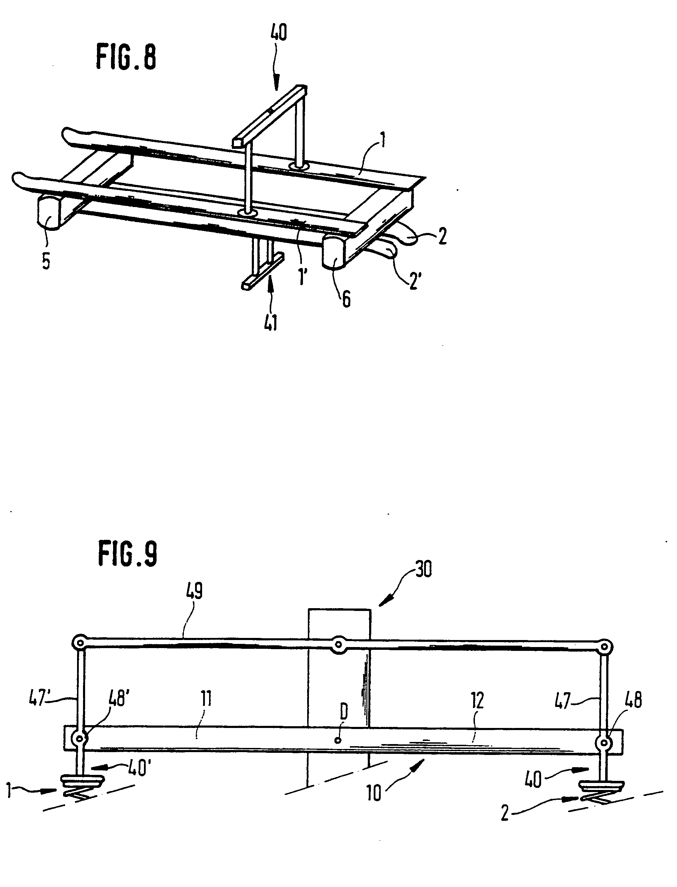

Besonders einfach und gleichzeitig vorteilhaft aufgrund geringer Fehlerkräfte lassen sich einzelne Federwindungen dann prüfen, wenn als Einspannvorrichtungen, 40, 41 bzw. 40', 41' Spitzen vorgesehen sind (Fig. 5), die in entsprechenden kegelförmigen Einsenkungen am Ende der zu prüfenden Federwindungen sitzen. Vorzugsweise sind diese Spitzen — wie in Fig. 7 gezeigt — über ein Wälzlager 43 in den Hebelbalken 10 bzw. 20 angeordnet, so daß sie sich leicht drehen können. Um die Einleitung von "Störkräften" weiter zu vermindern, ist der Kegelwinkel der Spitzen geringer als derjenige der Ausnehmung 56 in dem Prüfling, wie dies in Fig. 7, angedeutet ist.

Bei einer weiteren, in den Abbildungen nicht dargestellten Ausführungsform der Erfindung, ist anstelle von Hebelbalken 10, 20, eine entsprechende Anordnung von Hydraulikzylindern vorgesehen. Hierbei sind insgesamt vier Hydraulikzylinder vorgesehen, die paarweise koaxial angeordnet sind, wobei die beiden Paare vorzugsweise parallel nebeneinander liegen. Jedes der Paare faßt zwischen den Kolbenstangen der Zylinder ein federndes Element. Die gegenphasige Bewegung wird dadurch erreicht, daß jeweils ein Zylinder eines Paares mit dem entsprechenden Zylinder des anderen Paares über eine Leitung verbunden ist, wobei in mindestens einer der Leitungen als Schwingerreger eine Pumpe sitzt.

Wenn man Ski prüfen will, so eignen sich die in Fig. 8 stark schematisiert gezeichneten Einspannvorrichtungen 41, 41, die im Grundgedanken denjenigen nach Fig. 1 ähneln. Wesentlich ist hierbei, daß eine größere Durchbiegung der Ski 1, 1', 2, 2' als bei der Anordnung nach Fig. 1/2 dadurch ermöglicht wird, daß das obere Paar von Ski 1, 1' mit weiterem Abstand voneinander zwischen der oberen Einspannvorrichtung 40 und den Zwischenstücken 5, 6 gehalten ist, als die beiden unteren Ski 2, 2', so daß die beiden Anordnungen sich bei maximaler Durchbiegung "durchdringen" können.

Wenn man Federelemente prüfen will, die exakt geführt sein müssen, so genügt es unter Umständen nicht, drehbeweglich an den Kippbalken gelagerte Einspannelemente vorzusehen, wie dies in Fig. 1 gezeigt ist. In diesem Fall sind Einspannvorrichtungen vorteilhaft, wie sie in Fig. 9 gezeigt sind. Bei dieser bevorzugten Ausführungsform der Erfindung umfassen die Einspannvorrichtungen 40, 40' (ebenso die hier nicht gezeigten unteren Einspannvorrichtungen 41, 41') Haltestäbe 47, 47', die über Lager 48, 48' schwenkbar an den Enden der beiden Arme 11 und 12 gelagert sind. An den, den zu prüfenden Federn 1, 2 gegenüberliegenden Enden sind die Haltestäbe 47, 47' gelenkig mit einer Führungsstange 49 verbunden, die wiederum mittig am Maschinengestell 30 gelagert ist. Die Anordnung ist hierbei derart getroffen, daß die Haltestäbe 47, 47' parallel zueinander liegen und die Verbindungslinie zwischen dem Drehpunkt D des Hebelbalkens 10 und des Lagerpunktes der Führungsstange 49 am Maschinengestell 30 ebenfalls parallel zu den Haltestäben 47, 47' ist. Durch diese Parallelogramm-Führung ist gewährleistet, daß sich die Einspannvorrichtungen 40, 40' jeweils in einer geraden Linie auf die darunter liegende (nicht gezeigte) Einspannvorrichtung 41, 41' zu bewegt. Derartige Einspannvorrichtungen eignen sich besonders zum Prüfen von Schraubenfedern.

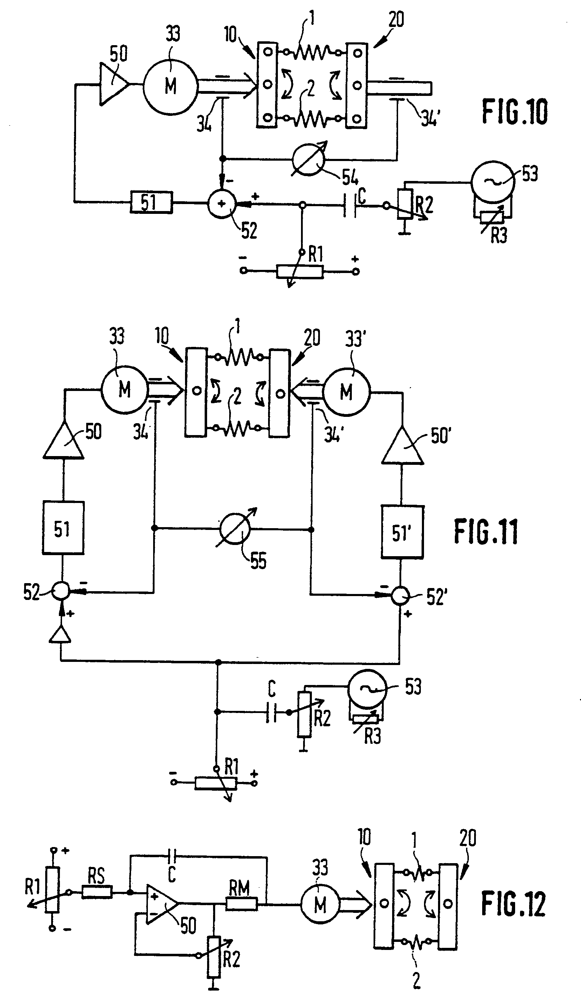

Im folgenden wir das Grundprinzip des Antriebs der beschriebenen Vorrichtungen anhand der Fig. 10 bis 12 näher beschrieben, wobei die Einzelelemente der Anordnungen bekannt sind.

Bei der in Fig. 10 gezeigten Bevorzugten Ausführungsform der Erfindung ist lediglich ein einziger Antriebsmotor 33 vorgesehen, der über einen Servoverstärker 50 mit Strom versorgt wird, an dessen Steuereingang der Ausgang eines Reglers 51 liegt. Der Regler 51 steht mit seinem Eingang mit dem Ausgang eines Vergleichers 52 in Verbindung, an dessen positivem Eingang ein Sollwert ansteht, der mit dem Ausgangssignal des Winkelgebers 34 über den invertierenden Vergleichereingang verglichen wird. Je nach dem am Sollwert-Eingang (+) stehenden Wert dreht somit die Ausgangswelle des Motors 33 auf einen bestimmten Winkelbetrag.

Der Sollwert-Eingang des Vergleichers 52 steht über einen Kondensator C und ein Amplituden-Regelpotentiometer R2 mit dem Ausgang eines Sinusgenerators 53 in Verbindung, dessen Ausgangsfrequenz über ein Stellglied R3 einstellbar ist. Weiterhin ist auf den Sollwert-Eingang (+) des Vergleichers 52 ein über ein Einstellorgan R1 einstellbares Gleichstrompotential geführt.

Zwischen die Ausgänge der beiden Winkelgeber 34 und 34' (z.B. aus der Anordnung nach Fig. 3) ist ein Meßorgan 54 geschaltet, wobei die Anordnung derart getroffen ist, daß die Phasenlage zwischen den Ausgangssignalen der beiden Winkelgeber 34 und 34' meßbar bzw. anzeigbar ist.

Beim Prüfen eines Paares von federnden Elementen geht man (nach den oben beschriebenen mechanischen Vorbereitungen) so vor, daß man zunächst über das Einstellorgan R1 die Ruheposition einstellt, in welcher die Hebelbalken 10, 20 im wesentlichen senkrecht zu der Verbindungslinie zwischen ihren Drehachsen D stehen. Daraufhin stellt man über das Einstellorgan R3 die Ausgangsfrequenz des Sinusgenerators 53 (bei geringer Amplitude) auf eine Frequenz ein, die etwas höher als die erwartete Resonanzfrequenz des Systems ist. Daraufhin senkt man die Frequenz des Sinusgenerators 53 solange ab, bis die beiden Hebelbalken 10 und 20 gegenphasig, also um 180° zueinander versetzt schwingen, was über das Meßorgang 54 beobachten werden kann. Daraufhin kann die gewünschte Amplitude eingestellt werden, wobei die Einstellung nicht nur von Hand (über das Einstellorgan R2), sondern auch "programmgesteuert" über ein Standardprogramm erfolgen kann, nach welchem verschiedene Belastungsamplituden nacheinander durchgefahren werden.

Wenn, wie in den Fig. 1 und 2 gezeigt, zwei Motoren 33 und 33' vorgesehen sind, so eignet sich die in Fig. 11 gezeigte Anordnung, die im wesentlichen eine Verdoppelung der in Fig. 10 gezeigten Regelschleife umfaßt, wobei beide Antriebe parallel angesteuert werden.

Bei der in Fig. 12 gezeigten bevorzugten Ausführungsform der Erfindung ist zur Einstellung der Resonanzfrequenz kein Drehwinkelgeber vorgesehen, sondern ein Meßwiderstand RM in der Versorgungsleitung zwischen dem Servoverstärker 50 und dem Motor 33 über den eine dem Ausgangsstrom proportionale Spannung über einen Kondensator C zurückgeführt werden kann. Das so gebildete System entspricht im Prinzip einem LC-Oszillator, bei dem Induktivität und Kapazität durch Masse und Feder ersetzt sind. Derartige Schaltungen sind im Prinzip bekannt (siehe z.B. U. Tietze, Ch. Schenk; Halbleiter-Schaltungstechnik, Springer-Verlag, 1986, Seite 441).

Vorzugsweise — und dies ist in den Abbildungen nicht gezeigt — sieht man eine "Notabschaltung" zum Abschalten des Motors bzw. der Motoren vor, die z.B. dergestalt erfolgen kann, daß man den Strombedarf des Motors und die Resonanzfrequenz des Systems überwacht. Bei Bildung eines Risses in einer der Feder steigt die Dämpfung und damit der Strombedarf an, die Federsteifigkeit und damit die Resonanzfrequenz fallen ab. Als Abschaltkriterium kann dann ein Absinken der Resonanzfrequenz bzw. ein Anstieg des Strombedarfes um einen bestimmten Bruchteil des bei Versuchsbeginn vorliegenden Wertes dienen.

Ein weiterer Vorteil der anhand der Abbildungen erläuterten Prüfvorrichtungen besteht darin, daß dieselben Vorrichtungen dann, wenn man Kraftmeßeinrichtungen vorsieht, sowohl zur dynamischen Prüfung als auch zur statischen Prüfung federnder Elemente verwendbar sind.

## Patentansprüche

1. Verfahren zum Prüfen von federnden Elementen mit im wesentlichen linearem Federweg, wobei man mindestens ein erstes federndes Element zwischen ersten Armen eines Paares von Hebelbalken mit jeweils einem ortsfesten Lager und mindestens ein zweites federndes Element zwischen zweiten Armen des Paares von Hebelbalken lagert und mindestens einen der Hebelbalken mittels eines Schwingerregers zyklisch bzw. sinusförmig hin- und herkippt und die federnden Elemente einem Lastspiel unterwirft, **dadurch gekennzeichnet, daß** man den einen Hebelbalken ausschließlich über die elastischen Elemente mit dem anderen Hebelbalken koppelt und die Frequenz des Schwingerregers derart einstellt, daß die Hebelbalken gegenphasig, d.h. um 180° phasenverschoben, hin- und herkippen und die Frequenz im wesentlichen der ersten Resonanzfrequenz des aus dem Hebelbalken und den federnden Elementen gebildeten Schwingkreises entspricht.

2. Vorrichtung zum Prüfen von federnden Elementen mit im wesentlichen linearem Federweg, mit mindestens einem Schwingerreger (33, 33') zum zyklischen Belasten der mindestens zwei Federelemente (1-4) mit zwei Hebelbalken (10, 20), die an einem Maschinengestell (30) jeweils über ein Lager (24, 24'; 36, 36') schwenkbar gelagert sind, das jeden Hebelbalken (10, 20) in jeweils einen ersten (11; 21) und einen zweiten Arm (12; 22) teilt, wobei die Hebelbalken (10, 20) in einer Ebene liegen und in dieser schwenkbar sind, mit jeweils einer Einspannvorrichtung (40, 40'; 41, 41') an jedem, zum jeweiligen Lager (24, 24'; 36, 36') distalen Ende jedes Armes (11, 12, 21, 22) zum Ankoppeln eines Endabschnittes.mindestens eines federnden Elementes (1-4) wobei mindestens einer der Hebelbalken (10, 20) über den bzw. über einen der Schwingerreger (33, 33') zyklisch bzw. sinusförmig hin- und herkippbar ist, **dadurch gekennzeichnet**, daß die zwei Hebelbalken (10, 20) vor Einspannen der federnden Elemente (1-4) frei gegeneinander schwenkbar gelagert sind, und daß der Schwingerreger (33, 33') in einer Frequenz ansteuerbar ist, die im wesentlichen der ersten Resonanzfrequenz des aus den Hebelbalken (10, 20) und den federnden Elementen (1-4) gebildeten Schwingkreises entspricht, so daß die Hebelbalken (10, 20) gegenphasig, d.h. um 180° gegeneinander versetzt, hin- und herkippbar sind.

3. Vorrichtung nach Anspruch 2, **dadurch gekennzeichnet**, daß mindestens ein Lager (36, 36') mittels einer Vorspanneinrichtung (14) derart in der durch die Hebelbalken (10, 20) verlaufenden Ebene in Richtung auf das andere Lager (24, 24') bewegbar ist, daß zwischen den Hebelbalken (10, 20) eingespannte federnde Elemente (1 bis 4) vorspannbar sind.

4. Vorrichtung nach einem der Ansprüche 2 oder 3, **dadurch gekennzeichnet**, daß alle (Hebel-) Arme (11, 12, 21, 22) gleich lang sind und im wesentlichen gleiche Massenträgheitsmomente um ihre durch die Lager (24, 24' ; 36, 36') definierten Kippachsen (D, D') aufweisen.

5. Vorrichtung nach einem der Ansprüche 2 bis 4, **dadurch gekennzeichnet**, daß an den Hebelbalken (10, 20) Zusatzmassen (13, 14 ; 23, 23' ; 25, 25') vorzugsweise relativ zum jeweiligen Lager (24, 24' ; 36, 36') verschiebbar angebracht sind, um die Massenträgheitsmomente der Hebelbalken (10, 20) einzustellen.

6. Vorrichtung nach einem der Ansprüche 2 bis 5, **dadurch gekennzeichnet**, daß an mindestens einem der Hebelbalken (10, 20) ein Sensor (34, 34') angekoppelt ist, über dessen Ausgangssignale eine Momentanposition des dazugehörigen Hebelbalkens (10, 20) meßbar und dem Schwingerreger (33, 33') als Regelsignal über einen Regelkreis zuführbar ist.

7. Vorrichtung nach einem der Ansprüche 2 bis 6, bei der die federnden Elemente jeweils zwei voneinander beabstandete, gleichsinnig bewegte Ankoppelpunkte und einen dazwischenliegenden, dazu gegensinnig bewegten Ankoppelpunkt nach Art von Blattfedern aufweisen, und die zwei Paare von Zwischenstücken (5, 6; 5', 6') umfaßt, um jeweils mindestens zwei der federnden Elemente (1, 2 ; 3, 4) mit ihren zwei gleichsinnig bewegten Ankoppelpunkten miteinander derart zu verbinden, daß jeweils mindestens zwei in Reihe geschaltete federnde Elemente zwischen die Einspannvorrichtungen (40, 41 ; 40', 41') spannbar und gleichzeitig prüfbar sind.

8. Vorrichtung nach einem der Ansprüche 2 bis 7, **dadurch gekennzeichnet**, daß die Einspannvorrichtungen (40, 40' ; 41, 41') an den Armen (11, 12 ; 21, 22) über Gelenke (48, 48') schwenkbar gelagerte Haltestäbe (47, 47') umfassen, die an ihren, den anzukoppelnden federnden Elementen (1, 2) gegenüberliegenden Enden über eine am Maschinengestell (30) schwenkbar gelagerte Führungsstange zur Bildung einer, vom Hebelbalken (10, 20) der Führungsstange (49) und den beiden Haltestäben (47, 47'),bestimmten Parallelogrammführung verbunden sind.

9. Vorrichtung nach einem der Ansprüche 2 bis 4, **dadurch gekennzeichnet**, daß die Einspannvorrichtungen (40, 41) Spitzenlager umfassen, die derart ausgebildet sind, daß eine einzelne Schraubenfederwindung, die an ihren Enden mit einander in Richtung des Federweges im wesentlichen gegenüberliegenden Einsenkungen (56) versehen ist, zwischen den Spitzenlagern einspannbar ist.

10. Vorrichtung nach Anspruch 9, **dadurch gekennzeichnet**, daß die Hebelbalken (10, 20) in der Horizontalebene schwenkbar gelagert sind, und daß am Maschinengestell (30) Einrichtungen (7, 55) zum Besprühen mit einem korrosiven Medium des Mittelabschnittes der zu prüfenden Schraubenfederwindungen (1, 2) vorgesehen sind.

11. Vorrichtung nach einem der Ansprüche 2 bis 10, **dadurch gekennzeichnet**, daß jeder Schwingerreger einen Elektro- oder Hydraulikmotor (33, 33') umfaßt, der über einen elektronischen Regler (50 bis 52) hinsichtlich einer konstanten oder variablen Schwingungsamplitude und Nullage auf Sollwerte regelbar ist.


## Claims

1. Method for testing spring elements with essentially linear spring travel, whereby at least one spring element is supported between the first set of arms of a pair of lever beams, each with a fixed bearing, and at least one other spring element is supported between the second set of arms of the pair of lever beams, and at least one of the lever beams is cyclically or sinusoidally oscillated in a seesaw motion by means of a vibration exciter, and the spring elements are subjected to a load cycle, characterised in that one of the lever beams is coupled to the other lever beam via the spring elements, and the frequency of the vibration exciter is adjusted so that the lever beams oscillate in opposite phase, i.e. 180° out of phase, and that the frequency essentially corresponds to the first resonant frequency of the oscillatory circuit formed by the lever beams and the spring elements.

2. Device for testing spring elements with essentially linear spring travel, with at least one vibration exciter (33, 33') for cyclically loading at least two spring elements (1-4), with two lever beams (10, 20) each of which are pivot-mounted via a bearing (24, 24' ; 36, 36') on a machine frame (30), that each of the lever beams (10, 20) is divided into a first (11 ; 21) and a second arm (12 ; 22), whereby the lever beams (10, 20) lie in a plane in which they can be tilted, each having a clamping device (40, 40' ; 41, 41') at the end of each arm (11, 12, 21, 22) remote from the bearings (24, 24' ; 36, 36') for coupling to an end section of at least one of the spring elements (1-4), whereby at least one of the lever beams (10, 20) can be cyclically or sinusoidally oscillated in a seesaw motion by means of a vibration exciter (33, 33'), characterized in that before the spring elements (1-4) are clamped, the two lever beams (10, 20) are freely pivoted with respect to each other, and that the vibration exciter (33, 33') may be operated at a frequency that essentially corresponds to the first resonant frequency of the oscillatory circuit formed by the lever beams (10, 20) and the spring elements (1-4), so that the lever beams (10, 20) may oscillate in opposite phase, i.e. 180° out of phase.

3. Device according to claim 2, characterised in that at least one bearing (36, 36') can be moved by means of at least one pre-loading device (14) in the plane running through the lever beams (10, 20) in the direction of the other bearing (24, 24') in such a way that spring elements (1-4) clamped between the lever beams (10, 20) may be pre-loaded.

4. Device according to one of claims 2 or 3, characterised in that all (lever) arms (11, 12, 21, 22) are of equal length and have essentially identical mass moments of inertia about their tilting axes (D, D') which are defined by the bearings (24, 24' ; 36, 36').

5. Device according to one of claims 2 to 4, characterised in that additional weights (13, 14 ; 23, 23' ; 25, 25'), that may preferably be displaced relative to the respective bearing (24, 24' ; 36, 36'), are attached to the lever beams (10, 20) in order to adjust the mass moments of inertia of the lever beams (10, 20).

6. Device according to one of claims 2 to 5, characterised in that a sensor (34, 34') is coupled to at least one of the lever beams (10, 20), and its output signal enables the instantaneous position of the associated lever beam (10, 20) to be measured and to be fed as a control signal to the vibration exciter (33, 33') via a control circuit.

7. Device according to one of claims 2 to 6, in which each of the spring elements has two coupling points separated from each other and moving in the same direction, and between them a coupling point moving in the opposite direction, in the form of leaf springs, and which contain two pairs of connecting pieces (5, 6 ; 5', 6') in order to connect together at least two of the spring elements (1, 2 ; 3, 4) with their two coupling points moving in the same direction, so that at least two spring elements may always be clamped in series between the clamping devices (40, 41 ; 40', 41') and be tested at the same time.

8. Device according to one of claims 2 to 7, characterised in that, at the arms (11, 12 ; 21, 22), the clamping devices (40, 40' ; 41, 41') include retaining rods (47, 47') pivoted via pins (48, 48'), which — at their ends opposite to those to be coupled to the spring elements (1, 2) — are connected to a guide rod pivoted to the machine frame (30) to form a parallelogram guide defined by the lever beams (10, 20), the guide rod (49) and the two retaining rods (47, 47').

9. Device according to one of claims 2 to 4, characterised in that the clamping devices (40, 41) have pivot bearings which are formed in such a way that an individual turn of a coil spring, which has depressions (56) in its ends that are essentially opposite to each other in the direction of the spring travel, can be clamped between the pivot bearings.

10. Device according to claim 9, characterised in that the lever beams (10, 20) are pivoted in the horizontal plane, and that devices (7, 55) for spraying a corrosive medium onto the centre section of the coil springs being tested (1, 2) are provided on the machine frame.

11. Device according to one of claims 2 to 10, characterised in that each vibration exciter contains an electric or hydraulic motor (33, 33') that can be adjusted to desired values of constant or variable vibration amplitude via an electronic controller (50 to 52).

## Revendications

1. Procédé pour tester des éléments à ressort à course élastique sensiblement linéaire, en montant au moins un premier élément à ressort entre des premiers bras d'une paire de barres de levier avec respectivement un support fixe et au moins un second élément à ressort entre des seconds bras de la paire de barres de levier, en faisant osciller au moins l'une des barres de levier de manière cyclique et respectivement sinusoïdale au moyen d'un générateur d'oscillations et en soumettant les éléments à ressort à un cycle de charges, caractérisé en ce que l'une des barres de levier est couplée exclusivement par l'intermédiaire des éléments à ressort avec l'autre barre de levier et que la fréquence du générateur d'oscillations est réglée de telle façon que les barres de levier oscillent en opposition de phase, c'est-à-dire avec un déphasage de 180° et que la fréquence correspond sensiblement à la première fréquence de résonance du circuit oscillant constitué par les barres de levier et les éléments à ressort.

2. Dispositif pour tester des éléments à ressort à course élastique sensiblement linéaire, comprenant au moins un générateur d'oscillations (33, 33') pour charger de manière cyclique au moins les deux éléments à ressort (1 à 4) avec deux barres de levier (10, 20) montées de manière pivotante, sur un bâti de machine (30), à savoir respectivement par l'intermédiaire d'un palier (24, 24' ; 36, 36') qui divise chaque barre de levier (10, 20) en un premier bras (11 ; 21) et un second bras (12 ; 22), les barres de levier (10, 20) se situant dans un même plan et pouvant pivoter dans celui-ci ; respectivement un dispositif de fixation (40, 40' ; 41, 41') à chaque extrémité de chaque bras (11, 12, 21, 22) située à distance du palier associé (24, 24' ; 36, 36'), destiné à l'accouplement d'une section terminale d'au moins un élément à ressort (1 à 4), au moins l'une des barres de levier (10, 20) pouvant être basculée de manière cyclique ou sinusoïdale dans les deux sens par l'intermédiaire du et respectivement d'un des générateurs d'oscillations (33, 33'), **caractérisé en ce** que les deux barres de levier (10, 20) sont montées de manière à pouvoir pivoter librement l'une vers l'autre avant la fixation des éléments à ressort (1 à 4), et que le générateur d'oscillations (33, 33') peut être commandé à une fréquence qui correspond sensiblement à la première fréquence de résonance du circuit oscillant constitué par les barres de levier (10, 20) et les éléments à ressort (1 à 4), de sorte que les barres de levier (10, 20) peuvent osciller en opposition de phase, c'est-à-dire avec un lécalage de 180° l'une par rapport à l'autre.

3. Dispositif selon la revendication 2, caractérisé en ce qu'au moins un palier (36, 36') peut être déplacé, au moyen d'un dispositif de précontrainte (14), dans le plan passant par les barres de levier (10, 20), en direction de l'autre palier (24, 24'), de manière à permettre la mise sous précontrainte des éléments à ressort (1 à 4) fixés entre les barres de levier (10, 20).

4. Dispositif selon l'une des revendications 2 ou 3, caractérisé en ce que tous les bras (de levier) (11, 12, 21, 22) ont la même longueur et présentent sensiblement les mêmes moments d'inertie de masse autour de leurs axes d'inclinaison (D, D') définis par les paliers (24, 24' ; 36, 36').

5. Dispositif selon l'une des revendications 2 à 4, caractérisé en ce que sur les barres de levier (10, 20) sont montées des masses additionnelles (13, 14 ; 23, 23' ; 25, 25'), de préférence de manière mobile par rapport au palier (24, 24' ; 36, 36') consideré, pour régler les moments d'inertie de masse des barres de levier (10, 20).

6. Dispositif selon l'une des revendications 2 à 5, caractérisé en ce que sur au moins l'une des barres de levier (10, 20) est monté un détecteur (34, 34') par l'intermédiaire des signaux de sortie duquel il est possible de mesurer une position momentanée de la barre de levier (10, 20) associée et de la transmettre par l'intermédiaire d'un circuit de réglage au générateur d'oscillations (33, 33') comme signal de réglage.

7. Dispositif selon l'une des revendications 2 à 6, dans lequel les éléments à ressort présentent respectivement deux points d'accouplement placés à distance l'un de l'autre et déplacés dans le même sens et un point d'accouplement intermédiaire déplacé dans le sens opposé, à la manière de ressorts à lames, et qui comprend deux paires de pièces intermédiaires (5, 6 ; 5', 6') pour relier respectivement au moins deux des éléments à ressort (1, 2 ; 3, 4) avec leurs deux points d'accouplement déplacés dans le même sens, de telle façon que respectivement au moins deux éléments à ressort montés en série peuvent être fixés entre les dispositifs de fixation (40, 41 ; 40', 41') et testés simultanément.

8. Dispositif selon l'une des revendications 2 à 7, caractérisé en ce que les dispositifs de fixation (40, 40'; 41, 41') comportent sur les bras (11, 12 ; 21, 22) des tiges de retenue (47, 47') montées de manière pivotante par l'intermédiaire d'articulations (48, 48') et dont les extrémités opposées aux éléments à ressort (1, 2) à coupler sont reliées par une tige de guidage montée de manière pivotante sur le bâti de machine (30) pour former un guidage par parallélogramme déterminé par la barre de levier (10, 20), la tige de guidage (49) et les deux tiges de retenue (47, 47').

9. Dispositif selon l'une des revendications 2 à 4, caractérisé en ce que les dispositifs de fixation (40, 41) comprennent des supports à pointes conformés de telle façon qu'une spire individuelle de ressort à boudin dont les extrémités sont munies d'évidements (56) sensiblement opposés dans le sens de la course élastique peut être fixée entre les supports à pointe.

10. Dispositif selon la revendication 9, caractérisé en ce que les barres de levier (10, 20) sont montées de manière à pouvoir pivoter dans le plan horizontal et que sur le bâti de machine (30) sont prévus des dispositifs (7, 55) pour la pulvérisation d'un agent corrosif sur la section médiane des spires de ressort à boudin (1, 2) à tester.

11. Dispositif selon l'une des revendications 2 à 10, caractérisé en ce que chaque générateur d'oscillations comprend un moteur électrique ou hydraulique (33, 33') qui, par l'intermédiaire d'un régulateur électronique (50 à 52), peut être réglé sur des valeurs de consigne en égard à une amplitude d'oscillation constante ou variable et à la position zéro.

FIG.2

FIG.1

FIG.3

EP 0 356 429 B1

FIG.4

FIG.5

FIG.6

FIG.7

FIG.8

FIG.9

FIG.10

FIG.11

FIG.12